# EUROPEAN PATENT APPLICATION

(11) **EP 3 062 504 A1**
(43) Date of publication of application: **31.08.2016**
(21) Application number: 15202229.9
(22) Date of filing: 22.12.2015
(51) Int. Cl.: H04N 5/225, H04N 13/02

(54) **IMAGE CAPTURING DEVICE AND IMAGE CAPTURING MODULE THEREOF**

(30) Priority: 26.02.2015 TW 104106266
(71) Applicant: Vivotek Inc., Chung-Ho City, Taipei County (TW)
(72) Inventor: HUANG, Shang-Yu, New Taipei City,Taiwan R.O.C. (TW); HSU, Chih-Hui, New Taipei City,Taiwan R.O.C. (TW)
(74) Representative: Cabinet Plasseraud

(57) **Abstract**

An image capturing device includes a holder, two camera lenses and two image assemblies. The holder has two surfaces, two through holes and two positioning sections. The two surfaces are opposite to each other. The two through hole extend from the first surface to the second surface. The two positioning sections are located on the second surface, and the two positioning sections respectively surround the two through holes. The two camera lenses are respectively disposed in the two through holes. The image assembly includes a circuit board and an image sensor. The image sensor has an image surface. The two image sensor is electrically connected to the circuit board. The positioning section is abutted against sides of the image sensor so as to position the image sensor, and thereby center of the image surface is located on central axis of the camera lens.

## Description

### Technical Field

The present disclosure provides an image capturing module and an image capturing device, more particular to a dual-lens image capturing module and an image capturing device having the dual-lens image capturing module.

### Background

With the development of technology, the three-dimensional image capturing application and the wide angle photography have been more popular, and the camera with dual-lens has been developed recently. Generally, the dual-lens camera includes two lens assemblies and two image sensors. The two lens assemblies are used for respectively capturing two different images, and the two images are respectively projected on the two image sensors. The arrangement of the dual-lens configuration is favorable for enlarging the field of view or producing a three dimensional image by post-processing of the two images.

However, when the manufacturing deviation and the assembly error occurred during manufacturing and assembling the camera, the accuracy of the arrangement of the lens assembly and the image sensor is reduced so that the image quality is deteriorated. Therefore, it is important to improve the accuracy of the arrangement of the lens assembly and the image sensor for improving the image quality.

### SUMMARY

The present disclosure provides an image capturing device and an image capturing module thereof for improving the accuracy of the arrangement of the lens assembly and the image sensor so as to improve the image quality.

According to the disclosure, an image capturing module includes a holder, two camera lenses and two image assemblies. The holder has a first surface, a second surface, two through holes and two positioning sections. The first surface and the second surface are opposite to each other, and the two through holes extends from the first surface to the second surface. The two positioning sections are located on the second surface, and the two positioning sections respectively surround the two through holes. The two camera lenses are respectively disposed in the two through holes. Each of the two image assemblies includes a circuit board and an image sensor. Each of the two image sensors has an image surface. The two image sensors are respectively electrically connected to the two circuit boards. The two positioning sections are respectively abutted against sides of the two image sensors so as to position the two image sensors, thereby respectively locating two centers of the two image surfaces on two central axes of the two camera lenses.

According to the disclosure, an image capturing device includes a case and the aforementioned image capturing module. The case has two openings. The case covers the holder of the image capturing module, and the two camera lenses respectively correspond to the two openings.

According to the disclosure, the two positioning sections are respectively abutted against the sides of the two image sensors so as to position the center of the image surface at the central axis of the lens assembly. That is, the image sensor is well aligned to the lens assembly. Therefore, the image sensor and the lens assembly are accurately arranged so as to improve the image quality.

### BRIEF DESCRIPTION OF THE DRAWINGS

The present invention will become more understood from the detailed description given hereinbelow and the accompanying drawings which are given by way of illustration only and thus are not limitative of the present invention and wherein:
FIG. 1 is a perspective view of an image capturing device according to a first embodiment;
FIG. 2 is an exploded view of the image capturing device in FIG. 1;
FIG. 3 is an exploded view of an image capturing module in FIG. 2;
FIG. 4 is a rear view of the image capturing module in FIG. 2;
FIG. 5 is a rear view of an image capturing module according to a second embodiment;
FIG. 6 is a rear view of an image capturing module according to a third embodiment; and
FIG. 7 is perspective view of an image capturing module according to a fourth embodiment.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

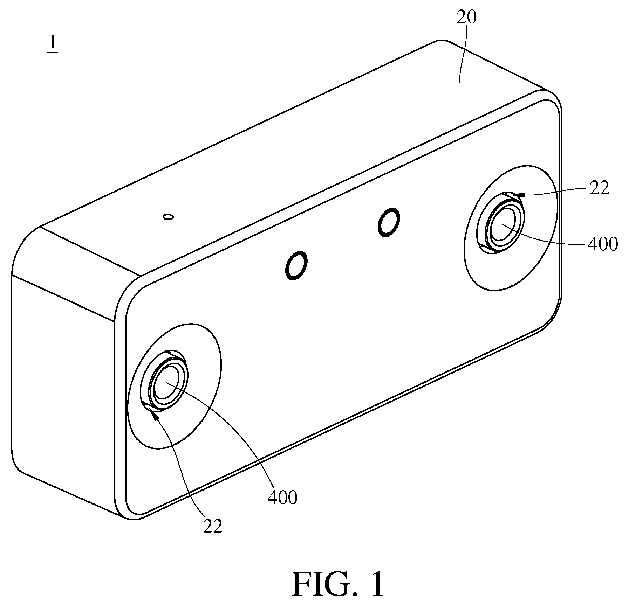

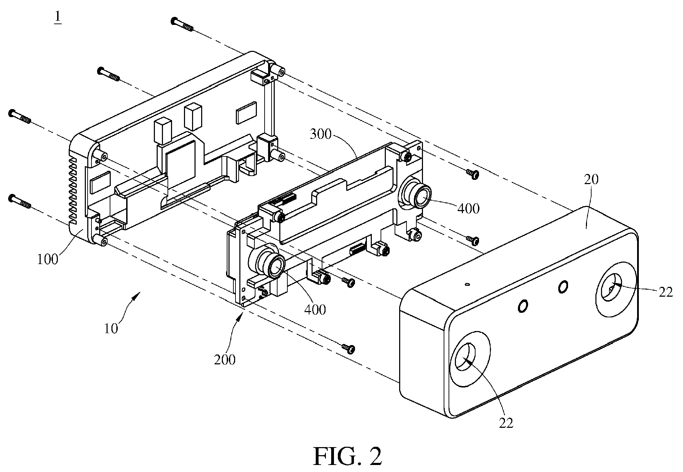

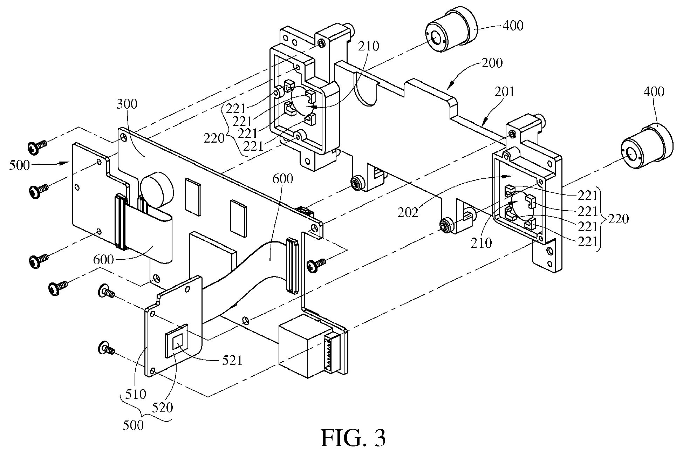

Please refer to FIG. 1 to FIG. 3. FIG. 1 is a perspective view of an image capturing device according to a first embodiment. FIG. 2 is an exploded view of the image capturing device in FIG. 1. FIG. 3 is an exploded view of an image capturing module in FIG. 2. In this embodiment, the image capturing device 1 includes an image capturing module 10 and a case 20. The image capturing device 1, for example, can be a surveillance device, a digital cameras or a dashboard camera.

The image capturing module 10 includes a base 100, a holder 200, a main board 300, two lens assemblies 400, two image assemblies 500 and two flexible cables 600. The holder 200 is located near the base 100 and assembled to the base 100. The holder 200 has a first surface 201 and a second surface 202 that are opposite to each other, and the second surface 202 faces the base 100. The holder 200 further has two through holes 210 and two positioning sections 220. Each of the two through holes 210 extends from the first surface 201 to the second surface 202. Each of the two positioning sections 220 is located on the second surface 202, and the two positioning sections 220 respectively surround the two through holes 210. In detail, each of the two positioning sections 220 can include a plurality of protrusions 221, and the protrusion 221 can be an L-shaped block. The protrusions 221 protrude from the second surface 202 of the holder 200. The protrusions 221 of one of the positioning sections 220 surround one of the through holes 210, and the protrusions 221 of the other one of the positioning sections 220 surround the other one of the through holes 210.

In this embodiment, the holder 200 can be made of rigid material such as metal and plastic steel, and the holder 200 can be a unitary member. In detail, if the positioning section and the through hole are two independent members of the image capturing module, an error may occur when the positioning section and the through hole are assembled together. Therefore, the holder 200 with the positioning section 220 and the through hole 210 being the unitary member is favorable for preventing the errors in assembling the image capturing module 10.

Furthermore, in this embodiment, the holder 200 can be manufactured by a computer numerical control (CNC) cutting process. That is, the holder 200 is formed from a single workpiece, and the cutting process is performed on the single workpiece to create the two through holes 210 and the protrusions 221 of the two positioning sections 220. Therefore, it is favorable for accurately arranging the through hole 210 and the positioning section 220 of the unitary holder 200 without any manufacturing deviation since the through hole 210 and the positioning section 220 are formed from a single cutting process.

The main board 300 is disposed between the base 100 and the holder 200, and the main board 300 can be screwed to the holder 200. The main board 300, for example, can be a printed circuit board including a central processing unit (CPU), an expansion slot and a socket. In this embodiment, the number of the main board 300 can be one, and the main board 300 can be located on a side of the holder 200, but the disclosure is not limited thereto. In other embodiments, the number of the main board 300 can be two, and the two main boards 300 can be respectively located on two sides of the holder 200 that are opposite to each other.

The two lens assemblies 400 are respectively disposed in the two through holes 210. In detail, an outer diameter of the lens assembly 400 corresponds to a diameter of the through hole 210, and the two lens assemblies 400 are respectively and coaxially fixed within the two through holes 210 by screw thread (not shown in the drawings) of the holder 200, but the disclosure is not limited thereto. In other embodiments, the lens assembly 400 can be adhered to the sidewall which forms the through hole 210.

Each of the two image assemblies 500 includes a circuit board 510 and an image sensor 520. The two circuit boards 510 are disposed on the holder 200. The two image sensors 520 are respectively and electrically connected to the two circuit boards 510. Each of the image sensors 520 has an image surface 521. The two image sensors 520 are respectively surrounded by the protrusions 221 of the two positioning sections 220. The protrusions 221 of one of the two positioning sections 220 are abutted against the sides of one of the two image sensors 520, and the protrusions 221 of the other one of the two positioning sections 221 are abutted against the sides of the other one of the two image sensors 520; thereby, the two image sensors 520 are precisely disposed on the holder 200 with the two image surfaces 521 respectively exposed from the two through holes 210.

The flexible cable 600, for example, can be a Flexible flat cable (FFC). An end of each of the two flexible cables 600 can be respectively and detachably connected to the main board 300. In detail, one of the two flexible cables 600 has two ends respectively and detachably connected to the main board 300 and one of the two circuit boards 510, and the other flexible cable 600 has two ends respectively and detachably connected to the main board 300 and the other one of the two circuit boards 510.

The two image assemblies 500 are spaced apart from the main board 300, and the two flexible cables 600 respectively connect the two image assemblies 500 and the main board 300. When the main board 300 is thermally deformed, the flexibility of the flexible cable 600 prevents the force, which is resulted from the thermal deformation of the main board 300, being applied on the two image sensor 520 as a buffer. Therefore, it is favorable for maintaining accurate arrangement of the lens assemblies 400 and the image sensors 520.

Furthermore, the two circuit boards 510 and the main board 300 are arranged in alternate series so that it is favorable for keeping the image capturing device 1 compact and connecting the circuit board 510 to the main board 300 by the flexible cable 600.

The case 20 is disposed on the base 100 and covers the holder 200 of the image capturing module 10. The case 20 has two openings 22, and the two lens assemblies 400 are respectively corresponded to the two openings 22; thereby, the two lens assemblies 400 are respectively exposed from the two openings 22.

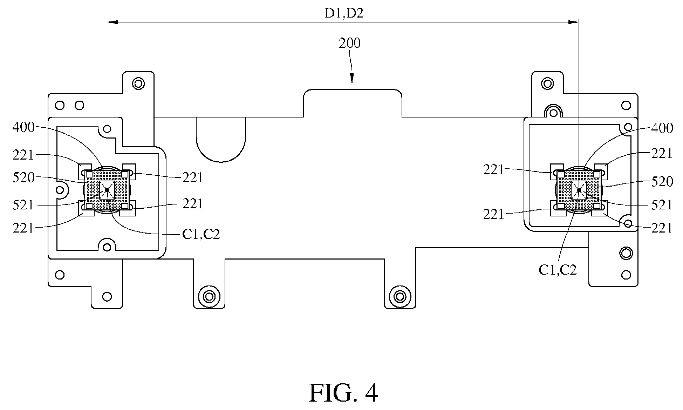

Please refer to FIG. 4. FIG. 4 is a rear view of the image capturing module in FIG. 2. The holder 200 is made of rigid material and manufactured by the cutting process. When the protrusions 221 of the two positioning sections 220 are respectively abutted against the sides of the two image sensors 520, the protrusions 221 position the two image sensors 520 at two image sides of the two lens assemblies 400, and thereby two centers C1 of the two image surfaces 521 are respectively located on two central axes C2 of the two lens assemblies 400. That is, a distance D1 between the two centers C1 of the two image surfaces 521 are equal to a distance D2 between the two central axes C2 of the two lens assemblies 400 so that the accuracy of the arrangement of the image sensor 520 and the lens assembly 400 is improved. In this embodiment, the image surface 521, for example, can be rectangular, and the center C1 of the image surface 521 is located on the intersection of two diagonals of the rectangle.

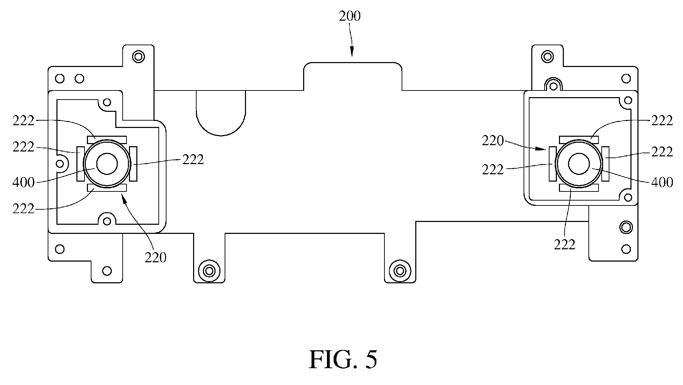

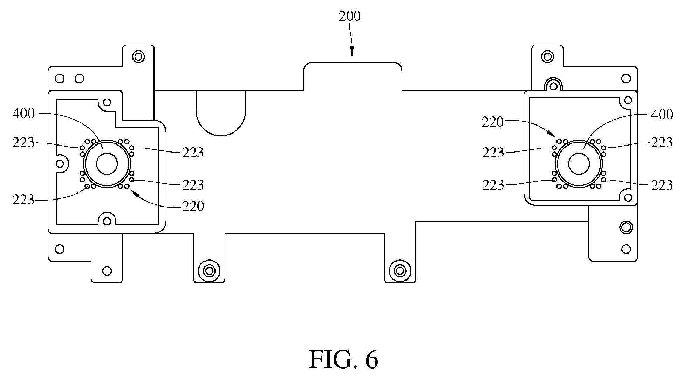

The protrusion 221 is an L-shaped block in the first embodiment, but the disclosure is not limited thereto. Please refer to FIG. 5 and FIG. 6. FIG. 5 is a rear view of an image capturing module according to a second embodiment. FIG. 6 is a rear view of an image capturing module according to a third embodiment. Since the second and the third embodiments are both similar to the first embodiment, only the differences will be illustrated hereafter.

As shown in FIG. 5, each of the positioning sections 220 includes a plurality of protrusions 222, and each of the protrusions 222 is a bar with its extending direction parallel to the second surface 202. As shown in FIG. 6, each of the positioning sections 220 includes a plurality of protrusions 223, and each of the protrusions 223 is a pillar with its extending direction perpendicular to the second surface 202.

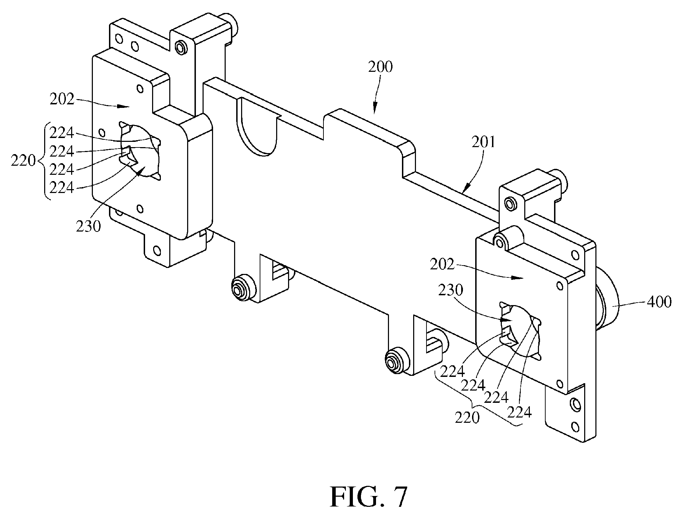

The positioning section 220 is a protrusion located on the second surface 202 in the first through third embodiments, but the disclosure is not limited thereto. Please refer to FIG. 7. FIG. 7 is perspective view of an image capturing module according to a fourth embodiment. Since the fourth embodiment is similar to the first embodiment, only the differences will be illustrated hereafter.

In this embodiment, the holder 200 further has two recesses 230 located on the second surface 202. Each of the two positioning sections 220 has a plurality of side surfaces 224. The side surfaces 224 of one of the positioning sections 220 form one of the recess 230, and the side surfaces 224 of the other positioning section 220 form the other two recess 230. In other words, each of the two recesses 230 has plural side surfaces 224, and the side surfaces 224 is served as the positioning section 220.

According to the disclosure, the two positioning sections are respectively abutted against the sides of the two image sensors so as to position the center of the image surface at the central axis of the lens assembly. That is, the image sensor is well aligned to the lens assembly. Therefore, the image sensor and the lens assembly are accurately arranged so as to improve the image quality.

Furthermore, the holder having the positioning sections and the through holes is a unitary member. Therefore, it is favorable for preventing the errors in the assembly of the image capturing module so as to provide high accuracy of the arrangement of the through hole and the positioning section.

Furthermore, the holder is made of rigid material so that it is favorable for preventing the holder from deformation due to the interference fit between the positioning section and the lens assembly. Moreover, the holder is manufactured by the cutting process so that it is favorable for reducing the manufacturing deviation. When the protrusions of the positioning section are abutted against the sides of the image sensor, the protrusions position the image sensor at the lens assembly, and thereby the center of the image surface is located on the central axis of the lens assembly. Therefore, the accuracy of the arrangement of the image sensor and the lens assembly are improved so as to further improve the image quality.

The foregoing description, for the purpose of explanation, has been described with reference to specific embodiments; however. The embodiments were chosen and described in order to best explain the principles of the disclosure and its practical applications, to thereby enable others skilled in the art to best utilize the disclosure and various embodiments with various modifications as are suited to the particular use contemplated. The embodiments depicted above and the appended drawings are exemplary and are not intended to be exhaustive or to limit the scope of the disclosure to the precise forms disclosed. Modifications and variations are possible in view of the above teachings.

## Claims

1. An image capturing module, comprising:
a holder having a first surface, a second surface, two through holes and two positioning sections, the first surface and the second surface being opposite to each other, the two through holes extending from the first surface to the second surface, the two positioning sections located on the second surface, and the two positioning sections respectively surrounding the two through holes;
two camera lenses respectively disposed in the two through holes; and
two image assemblies, each of the two image assemblies comprising a circuit board and an image sensor, each of the two image sensors having an image surface, the two image sensors respectively electrically connected to the two circuit boards, the two positioning sections respectively abutted against sides of the two image sensors so as to position the two image sensors, thereby respectively locating two centers of the two image surfaces on two central axes of the two camera lenses.

2. The image capturing module according to claim 1, further comprising a base, a main board and two flexible cables, wherein the holder is disposed on the base with the second surface facing the base, one of the two flexible cables has two ends respectively detachably connected to the main board and one of the two circuit boards, and the other one of the two flexible cables has two ends respectively detachably connected to the main board and the other one of the two circuit boards.

3. The image capturing module according to claim 1, wherein the holder further has two recesses located on the second surface, and each of the two positioning sections is a side surface forming one of the two recesses.

4. The image capturing module according to claim 1, wherein each of the two positioning sections comprises a plurality of protrusions, the plurality of protrusions of one of the two positioning sections surround one of the two through holes and are abutted against the sides of one of the two image sensors, the plurality of protrusions of the other one of the two positioning sections surround the other one of the two through holes and are abutted against the sides of the other one of the two image sensors.

5. The image capturing module according to claim 4, wherein each of the plurality of protrusions is alternatively a bar with an extending direction parallel to the second surface, a pillar with an extending direction perpendicular to the second surface or alternatively a L-shaped block.

6. The image capturing module according to claim 1, wherein the holder is a unitary member made of rigid material.

7. The image capturing module according to claim 6, wherein the holder is manufactured by cutting process.

8. The image capturing module according to claim 1, wherein the two camera lenses are respectively and coaxially fixed within the two through holes by screw thread.

9. The image capturing module according to claim 1, wherein the two camera lenses are respectively and coaxially fixed within the two through holes by adhering.

10. An image capturing device, comprising:
the image capturing module according to claim 1; and
a case having two openings, the case covering the holder of the image capturing module, and the two camera lenses respectively corresponding to the two openings.
